# DEMANDE DE BREVET EUROPEEN

(11) **EP 1 493 348 A1**
(43) Date de publication de la demande: **05.01.2005**
(21) Numéro de dépôt: 04291421.8
(22) Date de dépôt: 08.06.2004
(51) Int. Cl.: A44B 18/00

(54) **Procédé de fabrication d'autoagrippants à champignons d'accrochage et à boucles ayant une grande durée e vie et dispositifs auto-agrippants obtenus par le procédé**

(30) Priorité: 04.07.2003 FR 0308200
(71) Demandeur: Aplix Société Anonyme, 75008 Paris (FR)
(72) Inventeur: Ducauchuis, Jean-Pierre, 44100 Nantes (FR)
(74) Mandataire: Eidelsberg, Olivier Nathan

(57) **Abrégé**

La présente invention concerne un élément mâle en forme de champignon pour un auto-agrippant, notamment à champignons et boucles, comportant une tige cylindrique (2) ayant un axe longitudinal et une section transversale, une aile (5) faisant saillie latéralement par rapport à la tige (2), en s'étendant sensiblement tout autour de la tige, caractérisé en ce que la tige a une section transversale constante ou strictement décroissante du bas de la tige vers son sommet, et il est formé dans la tige une cavité (6) auxiliaire, dont la plus grande section transversalement à l'axe de la tige est de plus petite dimension que celle de la section transversale de la tige (2).

## Description

La présente invention se rapporte à un procédé de fabrication d'éléments mâles, notamment des champignons d'accrochage, de dispositifs auto-agrippant à éléments mâles et femelles. La présente invention se rapporte également à des rouleaux de moulage pour la fabrication d'éléments mâles de ce genre. Enfin, la présente invention se rapporte à des éléments mâles tels que pouvant être obtenus par le procédé suivant l'invention ainsi qu'à des dispositifs auto-agrippants comportant des éléments mâles suivant l'invention.

Actuellement, on réalise les champignons (c'est-à-dire des éléments ayant une tige sensiblement cylindrique, notamment circulaire, et une aile faisant saillie latéralement du sommet de la tige sur environ 360°, notamment en en faisant saillie d'une distance constante, par exemple des éléments sensiblement cylindriques de révolution, notamment circulaire, ayant en coupe longitudinale la forme d'un crochet) par thermoformage en faisant passer de la matière thermoplastique entre un rouleau de moulage et un rouleau de compression, le rouleau de moulage comportant un réseau de cavités de moulage, généralement de formes cylindriques circulaires, dans lesquelles pénètre la matière thermoplastique ramollie ou liquide. A la sortie du rouleau de moulage, et après refroidissement, on obtient une bande en matière thermoplastique dont font saillie des plots de forme complémentaire, généralement cylindriques circulaires, des cavités de moulage. On applique alors sur la surface supérieure de ces plots un rouleau de pression avec chauffage pour déformer par thermoformage la partie supérieure des plots afin d'obtenir en débordement latéral supérieur une ou des ailes, qui forme la partie d'accrochage des éléments mâles d'accrochage, que l'on appellera ci-après champignons par commodité de langage.
Dans les champignons actuels, toute la surface supérieure de la tige est compressée, les ailes débordant en hauteur sur les côtés. Ces champignons présentent notamment l'inconvénient suivant. Une fois introduits dans une boucle d'une partie femelle d'un auto-agrippant, il est difficile de l'en sortir par pelage ou traction verticale, la boucle ayant tendance à casser, sous l'effet de traction des ailes très rigides des champignons.
Par exemple, dans US-A-6162040, les champignons obtenus ont des ailes très rigides et les auto-agrippants réalisés avec ce type de champignon ont une durée de vie limitée, les boucles cassant facilement sous l'effet de traction des champignons. En outre, la forme des cavités du rouleau de moulage est compliquée, des formes en bulbe y étant utilisés pour former les bulbes, qui après pression, donneront des ailes épaisses et rigides. Dans le cas d'un quadrilobé, l'aile ne fait pas saillie de la tige sur toute la périphérie de celle ci, des systèmes compliqués à lignes de découpe à résistance amoindrie y étant prévus entre les lobes.

La présente invention vise à surmonter les inconvénients de l'art antérieur, en proposant un procédé de fabrication qui permet d'obtenir, de manière simple et à des cadences de production élevées, un champignon pour dispositif auto agrippant, qui, lorsqu'il est mis en coopération avec une boucle d'auto- agrippant, ne détériore pas celle ci lors d'une traction du champignon hors de la boucle.

Suivant l'invention, le procédé de fabrication d'une partie à champignon d'un auto-agrippant à champignons et boucles, comporte les étapes qui consistent à :
faire passer entre
   - un rouleau de moulage comportant un réseau de cavités de moulage, les cavités étant chacune de forme cylindrique de section transversale constante, ou strictement décroissante de l'ouverture supérieure jusqu'au fond de la cavité, notamment une section circulaire, carré, triangulaire, en losange, en croix ou rectangulaire, un tenon, notamment cylindrique et notamment de section circulaire, carré, triangulaire, en losange, en croix ou rectangulaire, faisant saillie du fond de la cavité, de préférence sensiblement au centre, la dimension en coupe transversale du tenon étant inférieure à celle de la cavité de moulage, et
   - un rouleau de compression,
   de la matière thermoplastique liquide ou ramollie pour emplir les cavités de moulage et obtenir en sortie une bande en matière thermoplastique dont sont issues des plots ayant en leur sein une cavité, et
comprimer avec chauffage la surface supérieure du plot pour obtenir un champignon suivant l'invention.

La présente invention se rapporte également à un champignon, comportant une tige cylindrique ayant un axe longitudinal et une section transversale constante ou strictement décroissante du bas de la tige vers le haut, une aile faisant saillie latéralement par rapport à la tige, en s'étendant sensiblement tout autour de la tige, caractérisé en ce que la tige a une section transversale constante ou strictement décroissante du bas de la tige vers le haut de la tige et il est formé dans la tige une cavité auxiliaire, dont la plus grande section transversalement à l'axe de la tige est de plus petite dimension que celle de la section transversale de la tige.

On obtient ainsi une plus grande souplesse du champignon dans son ensemble, la tige étant moins rigide et donc se déformant mieux, notamment latéralement, lors d'une traction au pelage (lorsqu'on sépare les champignons des boucles d'un auto-agrippant), de même que l'aile, qui étant moins épaisse, est plus apte à se déformer ou à basculer lors d'une traction verticale du champignon pour libérer la boucle d'une partie femelle, de sorte que le champignon parvient plus facilement à sortir de la boucle sans la casser. On obtient donc un auto-agrippant plus résistant (les boucles ont moins tendance à se déchirer en utilisation) et de plus grande longévité pour une même qualité (titre notamment) des fils de boucles de la partie femelle. En outre, ces champignons peuvent être fabriqués à des coûts très bas.
Suivant un perfectionnement, l'aile a une épaisseur la plus grande mesurée dans la direction de l'axe de la tige comprise entre 0,02 mm et 0,06 mm.
On a ainsi un champignon particulièrement souple, qui ne casse pas les boucles lorsqu'on l'en retire pour ouvrir une fermeture auto-agrippante à champignon et boucles.
Les champignons suivant l'invention ont ainsi un comportement en traction ou pelage aussi bon que des crochets classiques (obtenus généralement par moulage à partir de moules à tiroir compliqués ou extrusion), tout en conservant les avantages des champignons classiques, notamment la possibilité d'une fabrication plus simple en grande quantité et à bas coût par rapport à des crochets (qui eux , suivant leur orientation, ont un voire deux sens préférentiels).

Suivant un mode de réalisation particulièrement simple à fabriquer, la cavité auxiliaire s'étend sur sensiblement toute l'extension en hauteur de la tige, c'est à dire jusqu'à sensiblement la base de celle ci. En particulier, on peut fabriquer le rouleau de moulage par attaque au laser, avec interposition d'un masque qui ne laisse passer le rayon laser que pour former la tranchée annulaire correspondant à la paroi annulaire formant la tige.

Suivant un mode de réalisation préféré de l'invention, permettant en particulier une production particulièrement rapide des champignons, l'aile fait saillie de la tige sur toute la périphérie de la tige en étant symétrique de révolution.

Suivant un mode de réalisation donnant un champignon ayant une excellente qualité d'accrochage, la section transversale de la tige est en forme de croix ou de trèfle ayant de trois à six feuilles ou lobes, de préférence quatre lobes, et la cavité auxiliaire a une forme identique, de plus petite dimension, la croix ou le trèfle de la cavité étant circonscrit dans la croix ou le trèfle de la section de la tige.

Suivant un mode de réalisation avantageux, la section transversale de la tige est circulaire, carrée, triangulaire, rectangulaire ou en losange.

Suivant un mode de réalisation particulièrement préféré, la profondeur, dans la direction de l'axe de la tige, de la cavité auxiliaire est comprise entre 0,02 mm et 0,5 mm, notamment entre 0,02mm et 0,2 mm, de préférence entre 0,02 mm et 0,1 mm.

La présente invention vise également un dispositif auto-agrippant à champignons et boucles comportant une partie à champignons ayant des champignons suivant l'invention.

La présente invention vise également des parties à champignons de dispositifs auto-agrippant à champignons et boucles ayant une bande de base dont sont issus des champignons suivant l'invention.

La présente invention vise également un rouleau de moulage pour la fabrication de champignons pour des parties à champignons de dispositifs auto-agrippant à champignons et boucles, le rouleau de moulage comportant un réseau de cavités de moulage, la cavité étant de forme cylindrique, de section transversale constante ou strictement décroissante de l'ouverture supérieure de la cavité jusqu'au fond de celle ci, notamment circulaire, carré, triangulaire, en losange, en croix ou rectangulaire, caractérisé en ce que un tenon, notamment cylindrique et notamment circulaire, carré, triangulaire, en losange, en croix ou rectangulaire , fait saillie du fond de la cavité, de préférence sensiblement au centre, la dimension en coupe transversale du tenon étant inférieure à celle de la cavité de moulage.

Suivant un mode de réalisation préféré, le tenon a une forme de croix ou de trèfle ayant de trois à six lobes, de préférence quatre lobes, et la cavité a une forme identique, la croix ou le trèfle du tenon étant circonscrit dans le trèfle de la cavité.

On décrit maintenant à titre d'exemple des modes de réalisations de champignons suivant l'invention, ainsi qu'un procédé d'obtention de champignons suivant l'invention, en se reportant aux dessins, dans lesquels
La figure 1a est une vue en coupe d'un premier mode de réalisation d'un champignon suivant l'invention.
La figure 1b est une vue en coupe d'un autre mode de réalisation d'un champignon suivant l'invention.
La figure 2 est une vue de dessus du champignon de la figure 1a.
Les figures 3a, 3b, 3c, 3d, 3e, 3f et 3j sont des vues identiques à la figure 2 d'autres modes de réalisation de la présente invention.
La figure 4 est une vue identique à la figure 2 d'encore un autre mode de réalisation de l'invention.
La figure 5 est une vue identique à la figure 1a d'encore un autre mode de réalisation de l'invention.

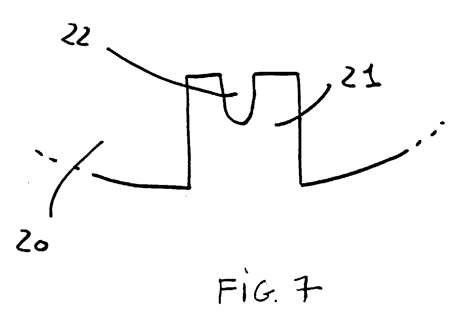

La figure 6 est une vue en coupe partielle de la bande intermédiaire obtenue à la sortie du rouleau de moulage, avant thermoformage ou thermocompression.
La figure 7 est une vue partielle d'un rouleau de moulage suivant l'invention, montrant en coupe une cavité de moulage, pour la fabrication d'un champignon suivant la figure 1a.

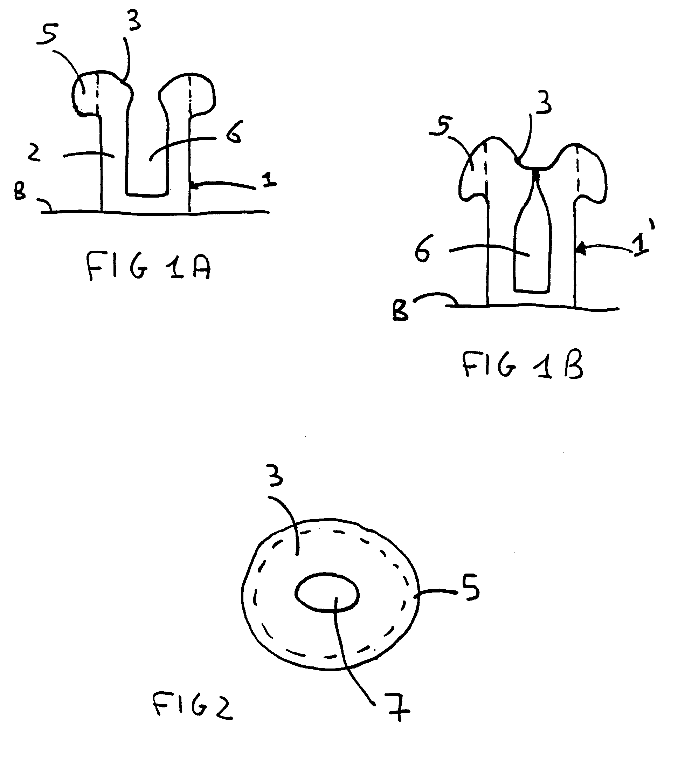

A la figure 1a, on peut voir une vue en coupe longitudinale d'un champignon 1 suivant l'invention. Le champignon 1 est sensiblement de révolution par rapport à l'axe longitudinal ou en hauteur du champignon. Le champignon est constitué d'une tige 2, s'étendant du bas du champignon (le champignon étant issu ici d'une bande B de base) jusqu'à sa surface supérieure 3. La tige 2 est de forme cylindrique, ici circulaire en section transversale.

La section transversale de la tige est constante. Suivant un autre mode de réalisation possible, elle pourrait être évasée, en ayant une section transversale qui décroît strictement du bas de la tige vers le sommet.

Une aile 5 annulaire fait saillie latéralement de la tige 2, sur tout le tour de la surface supérieure 3 de la tige 2.

Il est formé dans la tige 2 une cavité 6 en forme de trou borgne de forme cylindrique, de section circulaire, se rétrécissant en forme de goulot dans sa partie supérieure. La plus grande section transversale du trou borgne est plus petite que la section transversale constante de la tige, l'ouverture 7 de la cavité 6 auxiliaire débouchant à la surface supérieure 3 de la tige 2 en étant strictement circonscrite par le pourtour de cette surface supérieure et par la section transversale de la tige (cas d'une section transversale constante) ou par la plus petite des sections transversales de la tige, c'est à dire la section transversale de la tige au niveau du sommet de cette tige (cas d'une section transversale décroissante). Dans le cas où la section transversale de la tige n'est pas constante mais strictement décroissante du bas vers le sommet, la section transversale de la cavité est toujours inférieure à celle de la tige, quelque soit la hauteur de la tige à laquelle on se trouve, et en particulier, au niveau du sommet ou surface supérieure de la tige, la cavité n'empiète pas sur l'aile et reste strictement circonscrite en coupe transversale dans la section transversale (extérieure) de la tige.

La profondeur du trou borgne est égale par exemple à 0,1mm, et est comprise en général entre 0,02 mm et 0,5 mm, ce qui correspond à entre 10% et 100% de la hauteur totale de la tige, mesurée le long de son axe longitudinal.

A la figure 1b, le rétrécissement est tel que la cavité 6 est totalement enfermée à l'intérieur de la tige 2.
Pour former ces champignons 1 (Figure 1a) ou 1' (Figure 1b), on a fait passer un film liquide ou ramolli de matière thermoplastique, par exemple des polyoléfines tels que du polypropylène ou du polyéthylène, du polyester ou des polyamides, entre un rouleau de compression et un rouleau 20 de moulage. Il est formé dans le rouleau de moulage, débouchant à la surface extérieure du rouleau, un réseau de cavités 21 de moulage constituées chacune d'un trou borgne de forme cylindrique correspondant au cylindre de la tige 2, un tenon 22 faisant saillie du fond de la cavité de moulage, la forme du tenon 22 correspondant à celle du trou borgne 6 formé au sommet de la tige 2.

Les cavités de moulage sont réalisées notamment par attaque au laser de la matière du rouleau (par exemple en inox ou en caoutchouc) avec utilisation d'un ou plusieurs masques à motifs correspondant aux cavités. On peut également utiliser un laser réglé (par exemple sa lentille de focalisation) de manière à créer un profil au fond de la cavité en forme de courbe Gaussienne. Dans ce cas là, on obtient un tenon de petite hauteur, en forme de monticule (forme de la courbe de Gauss) au fond de la cavité. Dans le champignon correspondant, la cavité est alors de petite profondeur.

On obtient en sortie du rouleau de moulage, une bande B dont sont issu des tiges 2' cylindriques circulaires, comportant à son sommet un creux 6', de forme complémentaire de celle du tenon au fond de la cavité de moulage.

On applique ensuite, par l'intermédiaire d'un rouleau de pression avec chauffage, une compression thermique sur la partie supérieure des tiges 2' intermédiaires pour ainsi obtenir les champignons 1 finaux, la matière à la partie supérieure de la tige étant déformée en direction radiale, latéralement vers l'extérieur, pour obtenir l'aile 5. La compression va dans certain cas, en fonction de la pression exercée, rendre légèrement concave la surface supérieure 3 de la tige 2.

L'aile 5 aura généralement une épaisseur comprise entre 0,02mm et 0,2mm, de préférence entre 0,02 mm et 0,06 mm, ce qui est plus faible et plus souple que dans le cas des ailes des champignons actuels.

On entend par épaisseur de l'aile 5, la plus grande dimension, dans le sens de la hauteur de la tige, que l'on peut mesurer dans l'aile.

La plus grande largeur de la tige (son diamètre dans le cas d'une section circulaire constante) peut être comprise entre 0,2 et 1 mm, notamment 0,3 mm. Dans le même temps, la plus grande largeur de la cavité (Son diamètre dans le cas d'une section circulaire constante) peut être comprise entre 25 et 40% de la plus grande largeur de la tige, notamment 0,1 mm lorsque la tige a un diamètre de 0,3 mm (33%).

L'aile fait saillie généralement de la tige d'une distance, par exemple constante, comprise entre 0,03 mm et 0,2 mm, de préférence entre 0,08 mm et 0,1 mm.

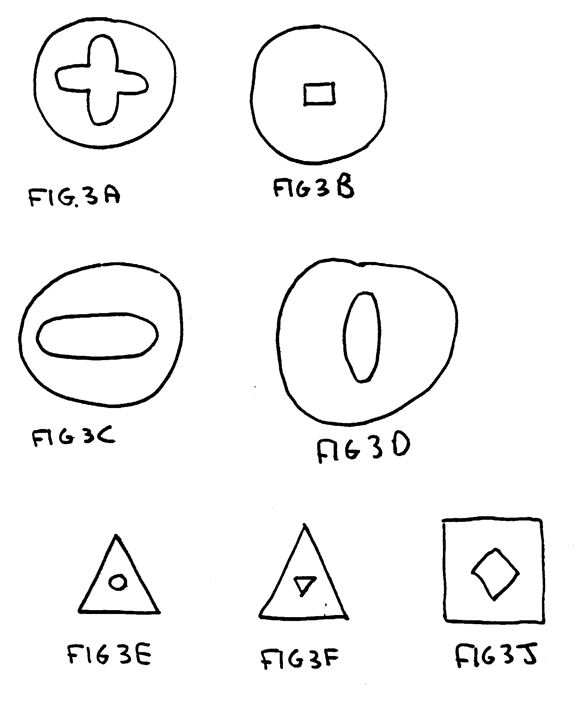

Aux figures 3, on peut voir d'autres modes de réalisation d'un champignon suivant l'invention. On peut voir plusieurs possibilités de section transversale du cylindre de la tige, en combinaison avec plusieurs possibilités de section transversales du cylindre de la cavité. Il entre bien évidemment dans le cadre de la présente invention toutes les combinaisons possibles entre chacune des sections transversales représentées aux figures pour la tige et chacune de celles représentées pour la cavité auxiliaire, par exemple une section de tige en losange avec une section en carrée de la cavité auxiliaire.

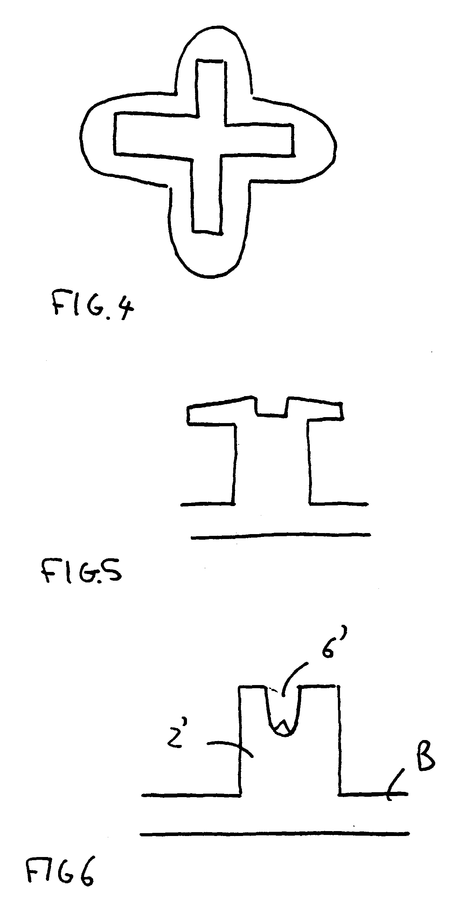

A la figure 4, il est représenté un autre mode de réalisation d'un champignon suivant l'invention. La tige du crochet a la forme d'un trèfle à quatre lobes, tandis que la cavité auxiliaire a la forme d'un trèfle à quatre lobes, circonscrit dans le trèfle de la tige. Il est à noter que dans ce mode de réalisation également l'aile fait saillie latéralement de la tige sur toute la périphérie de la partie supérieure de la tige. En revanche, dans ce mode de réalisation l'étendue de la saillie varie sur la périphérie.

Il va de soi qu'on peut également prévoir avec la tige à quatre lobes une cavité circulaire, carré en losange, ovale , etc.. ou inversement une tige à section circulaire, carrée, en losange, ovale, etc.. avec une cavité à section à quatre lobes.
Ces différentes formes permettent de privilégier l'accrochage dans certaines directions et notamment le pelage ou la traction longitudinale, latérale ou verticale d'une fermeture à auto agrippant.

## Revendications

1. Elément mâle en forme de champignon pour un auto-agrippant, notamment à champignons et boucles, comportant une tige cylindrique (2) ayant un axe longitudinal et une section transversale, une aile (5) faisant saillie latéralement par rapport à la tige (2), en s'étendant sensiblement tout autour de la tige, **caractérisé en ce que** la tige a une section transversale constante ou strictement décroissante du bas de la tige vers son sommet, et il est formé dans la tige une cavité (6) auxiliaire, dont la plus grande section transversalement à l'axe de la tige est de plus petite dimension que celle de la section transversale de la tige (2).

2. Elément suivant la revendication 1, **caractérisé en ce que** l'aile a une épaisseur la plus grande mesurée dans la direction de l'axe de la tige comprise entre 0,02 mm et 0,06 mm.

3. Elément suivant la revendication 1 ou 2, **caractérisé en ce que** la cavité auxiliaire s'étend sur sensiblement toute l'extension en hauteur de la tige, c'est à dire jusqu'à sensiblement la base de celle ci.

4. Elément suivant la revendication 1, 2 ou 3, **caractérisé en ce que** l'aile fait saillie de la tige sur toute la périphérie de la tige, en étant symétrique de révolution.

5. Elément suivant l'une des revendications 1 à 4, **caractérisé en ce que** la section transversale de la tige (2) est en forme de croix ou de trèfle ayant de trois à six feuilles ou lobes, de préférence quatre lobes, et la cavité auxiliaire a une forme identique, de plus petite dimension, la croix ou le trèfle de la cavité étant circonscrit dans la croix ou le trèfle de la section de la tige.

6. Elément suivant l'une des revendications 1 à 5, **caractérisé en ce que** la section transversale de la tige est constante, notamment en étant circulaire, carrée, triangulaire, ovale, rectangulaire , en croix ou en losange.

7. Elément suivant l'une des revendications 1 à 6, **caractérisé en ce que** la profondeur, dans la direction de l'axe de la tige, de la cavité auxiliaire est comprise entre 0,5 mm et 0,02 mm, notamment entre 0,02 mm et 0,1 mm.

8. Elément suivant l'une des revendications 1 à 6, **caractérisé en ce que** la cavité est de section transversale constante, notamment en ayant une largeur la plus grande comprise entre 25 et 40% de la largeur totale la plus grande de la tige.

9. Partie à champignons pour dispositif auto-agrippant comportant une bande de base dont sont issus des champignons suivant l'une des revendications 1 à 8.

10. Dispositif de fermeture auto agrippant comportant une partie à champignons suivant la revendication 9.

11. Rouleau de moulage pour la fabrication de champignons pour des parties à champignons suivant la revendication 9, le rouleau de moulage comportant un réseau de cavités de moulage, la cavité étant de forme cylindrique, de section transversale constante ou décroissante de l'ouverture supérieure de la cavité jusqu'au fond de celle ci, notamment circulaire, carré, triangulaire, en losange ou rectangulaire, **caractérisé en ce que** un tenon (22), notamment cylindrique et notamment circulaire, carré, triangulaire, en losange ou rectangulaire , fait saillie du fond de la cavité, de préférence sensiblement au centre, la dimension en coupe transversale du tenon étant inférieure à celle de la cavité de moulage.

12. Rouleau de moulage suivant la revendication 11, **caractérisé en ce que** les cavités sont formées par attaque au laser avec interposition d'un masque à motifs correspondants aux cavités.

13. Rouleau de moulage suivant la revendication 11, **caractérisé en ce que** les cavités sont formées par attaque au laser, de sorte que le plot obtenu au fond de la cavité est une sorte de monticule de forme de la courbe de Gauss.

14. Procédé de fabrication d'une partie à champignon suivant la revendication 9, comportant les étapes qui consistent à :
- faire passer entre un rouleau de moulage suivant la revendication 11 ou 12 et un rouleau de compression de la matière thermoplastique liquide pour emplir les cavités de moulage et obtenir en sortie une bande en matière thermoplastique dont sont issues des plots ayant en leur sein une cavité, et
- comprimer avec chauffage la surface supérieure du plot pour obtenir une bande à crochet.
